# EUROPEAN PATENT SPECIFICATION

(11) **EP 1 369 022 B1**
(45) Date of publication and mention of the grant of the patent: **22.02.2006**
(21) Application number: 02425370.0
(22) Date of filing: 06.06.2002
(51) Int. Cl.: A01D 46/26

(54) **An improved tree shaker for fruit collecting**
Baumschüttler zum Sammeln von Früchten
Dispositif pour secouer les arbres pour la collecte de fruits

(43) Date of publication of application: 10.12.2003
(73) Proprietor: Active S.r.l., 26037 S.Giovanni in Croce (CR) (IT)
(72) Inventor: Griffini, Alberto, 26034 Drizzona (CR) (IT)
(74) Representative: Robba, Pierpaolo

(56) References cited:
- EP-A- 0 906 721
- EP-A- 1 095 554
- FR-A- 2 639 176
- GB-A- 997 688
- US-A- 3 225 529
- US-A- 3 650 099

## Description

This invention relates to a shaking device for harvesting fruit from trees.

More particularly, the invention is advantageously employed for harvesting fruits from trees such as olives, walnuts, hazelnuts and so on.

Devices of this type provide for a rod equipped at its end with a hook and adapted to engage a branch of a tree, the rod being partially contained within a housing and receiving a reciprocating motion through a reciprocating reduction gear which in turn is driven by a motor.

When the tree shaker is operating, it is often necessary to change the engagement angle between the hook and the branch, or more precisely the angle formed by a vertical plane and the plane in which the hook and the rod end portion transmitting the reciprocating motion lie.

For this purpose, the known machines provide for a joint connecting the rod portion carrying the hook and the rod portion coupled to the reduction gear, and this connection allows a rotation in both directions through an angle of almost 360°.

There are known tree shakers with particular arrangements for allowing a rotation of the hook which engages a branch.

For example, EP-A-906 721 discloses a tree shaker which provides for a front handgrip with a helical spring coaxially inserted between a tubular front handgrip and the oscillating rod that is free to rotate, and a second helical spring coaxially inserted between an auxiliary tubular rear handgrip and the tubular body connected to the reduction gearbox.

In this known arrangement, nevertheless, in order to rotate the rod and therefore the hook for adjusting it to the branch location, it is necessary to stop the operation of the machine and to manipulate the rod by hand; then the hand is moved on the tubular handgrip and the operation of the machine is resumed.

This device shows another drawback: since the rod connecting the hook is free to rotate around its axis, it often occurs that the hook, because of the reciprocating shaking motions, imparts a turning motion to the rod with the consequent disengagement of the device from the branch. This causes a waste of time for hooking again the branch and can damage the tree bark.

The object of the present invention is to provide an improved tree shaker equipped with a front handgrip allowing to control the rotation of the hook during the operation, without the need for the operator of detaching his/her hand from the handgrip, such a device further transmitting no axial vibrations to the operator, so as to make the shaker operation easier.

According to the invention, these objects are achieved through a tree shaking device as claimed in claim 1. Further advantageous features are recited in the dependent claims.

In the tree shaker according to the present invention, the front handgrip is formed as a first sleeve having a polygonal inner cross section and slidably connected to a second sleeve. This latter sleeve is connected to the vibrating rod and has a cylindrical inner cross section, and a polygonal outer cross section along which the first sliding sleeve can be moved in the axial direction.

Thanks to the arrangement proposed by the present invention, the operator can rest his/her hand on the sleeve, or grip it, without receiving axial vibrations, while being able to properly turn the hook or at least preventing its undesired rotation, thus avoiding the hook disengagement from the branch when shaking a tree.

Since the operator's hand can always be maintained on the handgrip, it is not necessary to stop the shaking device in order to hook a branch or to rotate the hook. This way it is prevented a possible disengagement of the hook due to the reaction of the intervening forces and the work is rendered easier, less fatiguing and more profitable.

The present invention will now be disclosed with reference to the accompanying drawings illustrating a preferred, but not limiting embodiment of the invention, in which:
Figure 1 is a schematic view of a tree shaker according to the invention;
Figure 2 is a partial perspective view of the end portion of the shaker shown in Fig. 1.

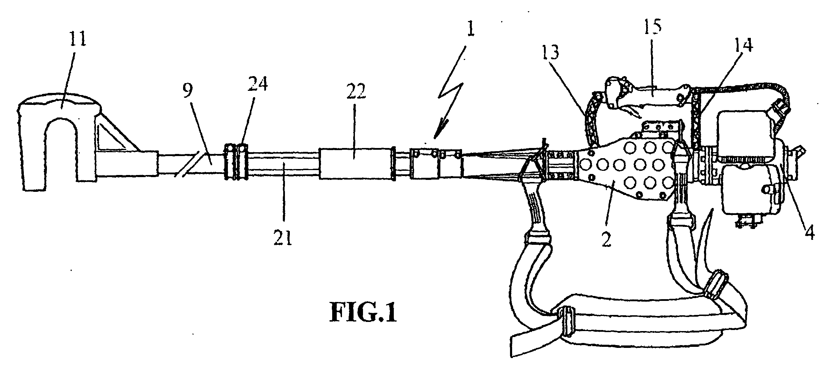

With reference to Figure 1, a tree shaker 1 according to the invention comprises a body or housing 2 which houses a reducing gear which includes a kinematic mechanism and is driven by a motor 4 to impart a reciprocating motion to a rod 9 which in turn carries at its end a hook 11 for engaging the branch of a tree from which fruits are to be harvested.

The tree shaker 1 comprises a front handgrip 22 which shall be described with more details hereinafter and a rear handgrip 15 on which the controls of the device are located. In the device illustrated in Fig. 1, the rear handgrip 15 is connected to the housing 2 by a front arm 13 and a rear connecting rod 14 whose lengths are different.

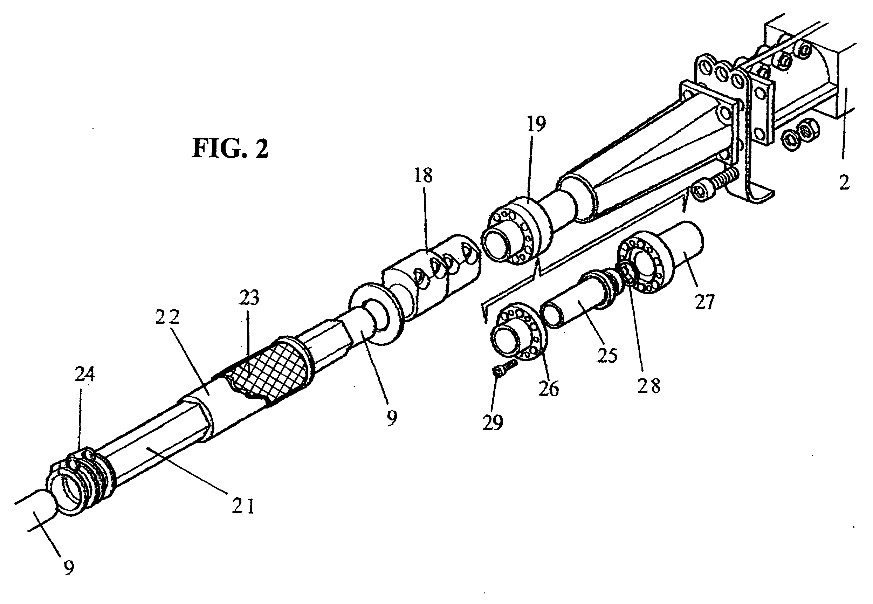

With reference also to Fig. 2, the end of the rod 9 opposite the end carrying the hook, is connected to the kinematic mechanism of the reduction gear through a connecting sleeve 18 and an intermediate device 19 which allows the rotation of the rod 9 with respect to the reduction gear.

The device 19, better shown in the detail of Fig. 2, comprises a spindle 25 which is disposed between a flange 26 and a flange 27 which are joined together by two or more screws 29.

The flange 27 is coupled to the kinematic mechanism within the reduction gearbox. Thanks to the manufacturing tolerances of flanges 26 and 27, the spindle 25, connected to the sleeve 18, can rotate about its axis and allow the rotation of the hook.

An O-ring 28 lodged between the spindle 25 and the flange 27 and frictionally engaging the corresponding surfaces, allows for a better control when rotating the hook.

A sleeve 21 surrounds and is rigidly secured onto a portion of rod 9, for instance by means of a clamp-shaped housing 24 which is tightened by at least two screws or equivalent means.

The sleeve 21 has an inner cylindrically shaped surface, while its outer cross section is polygonal. Another sleeve 22 having a polygonal inner cross section corresponding to the one of sleeve 21 is slidably mounted over sleeve 21 so that such parts are integral to one another in respect of the rotation thanks to their polygonal shape. As illustrated in the disclosed embodiment, preferably the polygonal cross sections of the sleeves are hexagonal cross sections.

The slidable sleeve 22 which constitutes the front handgrip has an outer cylindrical configuration and is preferably covered by an outer coating 23 of rubber or other elastomeric material for making the handgrip more comfortable and preventing any hand slippage. Such a coating is partially illustrated in the scrap cross section of Fig. 2.

While operating a tree shaking device according to the present invention, the operator supports the device through a shoulder belt (or sling) and actuates it with his/her hand through the controls on the rear handgrip 15, while his/her other hand grips the sleeve 22.

The handgrip formed by the sleeve 22 allows to turn the hook in the desired manner or anyhow prevents a rotation thereof which could disengage it from the branch while the device is shaking the tree, and thanks to the possibility of axial sliding, the does not transmit to the operator the axial vibrations of the device.

Of course the sleeve 21 can have a different section from the hexagonal one and is generally realised as a prismatic segment co-operating with a sleeve 22 having a complementary shape. The fastening member 18 can comprise a collar with screws or other functionally equivalent devices.

Of course, the rod 9 and the prismatic segment can be realised as a one-piece member either by machining or by welding although, from an economical point of view, this embodiment is not presently preferred.

Although the invention has been illustrated with reference to preferred embodiments, it is generally subjected to other applications and modifications which fall within the scope of the invention as it will be evident to the skilled of the art.

## Claims

1. A tree shaking device for collecting fruit from a tree comprising:
a housing (2) containing a reduction gear including a kinematic mechanism driven by a motor (4) transmitting a reciprocating motion to a rod (9) provided with a hook (11) at one end for engaging the branches of a tree in order to harvest fruits therefrom, the other end of said rod (9)being coupled to said reduction gear,
a rear handgrip (15) on which the device controls are positioned, connected to said housing (2); and
a tubular front handgrip slidably surrounding said rod (9);
**characterised in that** said rod (9) is connected to the kinematic mechanism of said reduction gear through an intermediate device (19) allowing a rotation about its axis, and **in that** said front handgrip is formed as a first sleeve (22) axially slidable with respect to said rod (9) so as to allow the rotation of said hook (11) while said shaking device is operating.

2. A tree shaking device as claimed in claim 1, **characterised by** further comprising a second sleeve (21) having a polygonal outer cross section, firmly secured to a portion of said rod (9) and connected to said kinematic mechanism of the reduction gear through said rotatable device (19), and in that said first sleeve (22) has an polygonal inner cross section corresponding to the one of said first sleeve (21) so as to be integral with it in respect of rotation motions.

3. A tree shaking device as claimed in claim 2 or 3, **characterised in that** said inner cross section of the first sleeve (22) and outer section of the second sleeve (21) are hexagonal.

4. A tree shaking device as claimed in claim 3, **characterised in that** said rod (9) is connected to said intermediate device (19) through a connecting sleeve (18).

5. A tree shaking device as claimed in the preceding claims, **characterised in that** said sleeve (22) provides for an outer coating (23) of an elastomeric material to make comfortable the handgrip and preventing hand slippage.

6. A tree shaking device as claimed in claims 2 to 5, **characterised in that** said rotatable device (19) includes a spindle (25) rotatable about its axis and disposed between two flanges (26, 27) joined together by screws (29).

7. A tree shaking device as claimed in claim 6, **characterised in that** one (27) of said flanges is connected to the kinematic mechanism of said reduction gear (4), and **in that** said spindle (25) is connected to said connecting sleeve (18).

8. A tree shaking device as claimed in claim 7, **characterised in that** said rotatable device (19) further comprises an O-ring (28) lodged between said spindle (25) and said flange (27) connected to the kinematic mechanism.

## Patentansprüche

1. Ein Baum-Schüttelgerät zum Einsammeln von Früchten von einem Baum, welches Folgendes umfasst:
ein Gehäuse (2), welches ein Untersetzungsgetriebe enthält, welches einen kinematischen Mechanismus einschließt, welcher von einem Motor (4) angetrieben wird, wobei eine hin- und hergehende Bewegung auf eine Stange (9) übertragen wird, welche an einem Ende mit einem Haken (11) für den Eingriff in die Äste eines Baumes ausgestattet ist, um Früchte von dort zu emten, wobei das andere Ende von besagter Stange (9) an das besagte Untersetzungsgetriebe gekoppelt ist,
einen hinteren, mit besagtem Gehäuse (2) verbundenen Handgriff (15), auf welchem die Gerätesteuerelemente positioniert sind; und
einen röhrenförmigen vorderen Handgriff, welcher besagte Stange (9) verschiebbar umgibt;
**dadurch gekennzeichnet, dass** besagte Stange (9) mit dem kinematischen Mechanismus von besagtem Untersetzungsgetriebe durch eine Zwischenvorrichtung (19) verbunden ist, welche eine Rotation um ihre Achse erlaubt, und dass besagter vorderer Handgriff als eine erste Hülse (22) ausgebildet ist, welche in Bezug auf besagte Stange (9) achsial verschiebbar ist, so dass die Rotation des besagten Hakens (11) erlaubt wird, während das besagte Schütteigerät sich in Betrieb befindet.

2. Ein Baum-Schüftelgerät wie in Anspruch 1 beansprucht, **dadurch gekennzeichnet, dass** es weiters eine zweite Hülse (21) umfasst, welche einen polygonalen äußeren Querschnitt hat, und welche fest an einem Abschnitt der besagten Stange (9) befestigt und mit besagtem kinematischen Mechanismus von besagtem Untersetzungsgefiebe durch besagte drehbare Vorrichtung (19) verbunden ist, und dass besagte erste Hülse (22) einen polygonalen inneren Querschnitt hat, welcher mit jenem von besagter erster Hülse (21) korrespondiert, so dass sie in Bezug auf Drehbewegungen integral mit ihr ist.

3. Ein Baum-Schüttelgerät wie in Anspruch 2 oder 3 beansprucht, **dadurch gekennzeichnet, dass** besagter innerer Querschnitt der ersten Hülse (22) und äußerer Querschnitt der zweiten Hülse (21) sechseckig sind.

4. Ein Baum-Schüttelgerät wie in Anspruch 3 beansprucht, **dadurch gekennzeichnet, dass** besagte Stange (9) mit besagter Zwischenvorrichtung (19) durch eine Verbindungshülse (18) verbunden ist.

5. Ein Baum-Schüttelgerät wie in den vorgehenden Ansprüchen beansprucht, **dadurch gekennzeichnet, dass** besagte Hülse (22) einen äußeren Überzug (23) aus einem elastomeren Material vorsieht, um den Handgriff bequem zu machen und ein Rutschen der Hand zu verhindem.

6. Ein Baum-Schüttelgerät wie in den Ansprüchen 2 bis 5 beansprucht, **dadurch gekennzeichnet, dass** besagte drehbare Vorrichtung (19) eine Spindel (25) enthält, welche um ihre Achse drehbar und zwischen zwei Flanschen (26, 27) angeordnet ist, welche mittels Schrauben (29) miteinander verbunden sind.

7. Ein Baum-Schüttelgerät wie in Anspruch 6 beansprucht, **dadurch gekennzeichnet, dass** einer (27) der besagten Flansche mit dem kinematischen Mechanismus von besagtem Untersetzungsgetriebe (4) verbunden ist, und dass besagte Spindel (25) mit der Verbindungshülse (18) verbunden ist.

8. Ein Baum-Schüttelgerät wie in Anspruch 7 beansprucht, **dadurch gekennzeichnet, dass** besagte drehbare Vorrichtung (19) weiters einen O-Ring (28) umfasst, welcher zwischen besagter Spindel (25) und besagtem, mit dem kinematischen Mechanismus verbundenen Flansch (27) aufgenommen ist.

## Revendications

1. Dispositif de secouage d'arbre servant à ramasser les fruits à partir de l'arbre, comprenant :
un logement (2) contenant un engrenage de réduction incluant un mécanisme cinématique entraîné par un moteur (4) transmettant un mouvement de va-et-vient à une tige (9) pourvue d'un crochet (11) au niveau d'une extrémité pour engager les branches de l'arbre afin de récolter ses fruits, l'autre extrémité de ladite tige (9) étant couplée audit engrenage de réduction,
une zone de prise manuelle arrière (15) sur laquelle les commandes du dispositif sont placées, connectées audit logement (2) ; et
une zone de prise manuelle avant tubulaire entourant à coulissement ladite tige (9) ;
**caractérisé en ce que** ladite tige (9) est connectée au mécanisme cinématique dudit engrenage de réduction par un dispositif intermédiaire (19) permettant une rotation autour de son axe et **en ce que** ladite zone de prise manuelle avant est formée d'un premier manchon (22) pouvant coulisser axialement par rapport à ladite tige (9) de façon à permettre la rotation dudit crochet (11) pendant que ledit dispositif de secouage est en fonctionnement.

2. Dispositif de secouage d'arbre selon la revendication 1, **caractérisé en ce qu'**il comprend, de plus, un second manchon (21) présentant une section transversale extérieure polygonale, fixé solidement à une partie de ladite tige (9) et connecté audit mécanisme cinématique de l'engrenage de réduction par l'intermédiaire dudit dispositif rotatif (19), et **en ce que** ledit premier manchon (22) présente une section transversale intérieure polygonale correspondant à celle dudit second manchon (21) de façon à être solidaire de lui par rapport aux mouvements de rotation.

3. Dispositif de secouage d'arbre selon la revendication 2 ou 3, **caractérisé en ce que** ladite section transversale intérieure du premier manchon (22) et ladite section extérieure du second manchon (21) sont hexagonales.

4. Dispositif de secouage d'arbre selon la revendication 3, **caractérisé en ce que** ladite tige (9) est connectée audit dispositif intermédiaire (19) par l'intermédiaire d'un manchon de connexion (18).

5. Dispositif de secouage d'arbre selon les revendications précédentes, **caractérisé en ce que** ledit manchon (22) est doté d'un revêtement extérieur (23) en un matériau élastomère pour en rendre la zone de prise manuelle confortable et empêcher la main de glisser.

6. Dispositif de secouage d'arbre selon les revendications 2 à 5, **caractérisé en ce que** ledit dispositif rotatif (19) comprend un tourillon (25) pouvant tourner autour de son axe et disposé entre deux brides (26, 27) assemblées par des vis (29).

7. Dispositif de secouage d'arbre selon la revendication 6, **caractérisé en ce que** l'une (27) desdites brides est connectée au mécanisme cinématique dudit engrenage de réduction (4) et **en ce que** le tourillon (25) est connecté audit manchon de connexion (18).

8. Dispositif de secouage d'arbre selon la revendication 7, **caractérisé en ce que** ledit dispositif rotatif (19) comprend, de plus, un joint torique (28) logé entre ledit tourillon (25) et ladite bride (27) connectée au mécanisme cinétique.
